Europäisches Patentamt

European Patent Office

Office européen des brevets

(11) Publication number : **0 479 475 A2**

# (12) EUROPEAN PATENT APPLICATION

(21) Application number : **91308692.2**

(22) Date of filing : **24.09.91**

(51) Int. Cl.⁵ : **G11B 7/085**

(30) Priority : **03.10.90 JP 263981/90**

(43) Date of publication of application :
**08.04.92 Bulletin 92/15**

(84) Designated Contracting States :
**DE FR GB**

(71) Applicant : **International Business Machines
Corporation
Old Orchard Road
Armonk, N.Y. 10504 (US)**

(72) Inventor : **Kagami, Naoyuki
Shounanlifetownhanezawadanchi, 26-305, 921
banchi Endoh, Fukisawa-shi, Kanagawa-ken
(JP)**
Inventor : **Kubo, Hiroaki
1624 banchino 35, Manasawa
Atsugi-shi, Kanagawa-ken (JP)**
Inventor : **Okada, Keiichi, Greenhill Aizawa 202
3 banchi 1 goh, 2-chome Aizawa, Seya-ku
Yokohama-shi, Kanagawa-ken (JP)**
Inventor : **Takekoshi, Makoto
25-13 Tanachou, Midori-ku
Yokohama-shi, Kanagawa-ken (JP)**

(74) Representative : **Blakemore, Frederick
Norman
IBM United Kingdom Limited Intellectual
Property Department Hursley Park
Winchester Hampshire SO21 2JN (GB)**

(54) **Disk storage apparatus.**

(57) Disk storage apparatus comprises driving means (78) responsive to a drive signal for moving a head radially across any storage disk compatible with the apparatus. The velocity of the head moving across the disk is detected by velocity detecting means (74). A target velocity of the head is indicated by a velocity profile stored in a memory (86). Control means (200) measures the time required for moving the head by a predetermined distance at a predetermined velocity. A drive signal generator (90) generates the drive signal as function of the difference between the target velocity and the output from the velocity detecting means and the difference between the measured time and a predetermined value. This advantageously permits the velocity of the head during a seek operation to be controlled independently of scatter in circuit constants or variations in disk structure, and allows successful transition between seek operation and track following operations.

FIG. 1

EP 0 479 475 A2

The present invention relates to disk storage apparatus for controlling the velocity of a read-write head during a seek operation.

In optical disk storage apparatus for example, during a seek operation in which a laser beam moves in the radial direction of an optical disk while crossing tracks on the disk, the velocity of the beam is based on a TES (Tracking Error Signal) that indicates any deviation of the beam from the track center. Velocity control is performed so that the beam is moved at an ideal velocity according to the distance of the beam from a target position.

In such velocity control, velocity information obtained by differentiating the TES and a velocity profile that indicates the ideal velocity according to the distance to the target position are compared with each other. The velocity of the laser beam may thus be controlled so that any difference is reduced to zero. The velocity profile is configured so that the beam reaches the target position in a short time and decelerates so as to shift to a track following operation at the target position.

However, if the velocity information is obtained from the average amplitude of the signal obtained by differentiating the TES, the velocity information varies as a function of the shape of a track guide groove on the optical disk and scatter in circuit constants. Moreover, even if the velocity information is obtained independently of the differentiation of the TES, the value of the velocity information changes due to scatter in circuit constants. Accordingly, even if the velocity of the beam is controlled so that a difference between a detected velocity and an ideal velocity from the velocity profile becomes zero, the velocity at which the beam moves may be higher or lower than the ideal velocity as the case may be.

Even if the velocity information itself precisely shows an actual velocity, a driving signal generated based on the precise velocity information may fluctuate due to variations in circuit constants and cause a similar problem. Such a problem may arise not only in optical disk drive apparatus but also in magnetic disk drive apparatus.

In accordance with the present invention, there is now provided disk storage apparatus comprising: driving means for moving a head in the radial direction on storage disk, velocity detecting means for detecting of the actual velocity of the head; a memory storing a velocity profile for generating a velocity measurement as a function indicating a target velocity of the head; and drive signal generating means generating the drive signal as a function of the difference between the velocity measurement from said velocity detecting means and the target velocity from said velocity profile; characterised in that the apparatus further comprises compensation means for measuring the time taken to move the head by a predetermined distance at a predetermined velocity and for varying said drive signal as a function of the difference between the measured time and a predetermined reference value to minimise any steady state offset between the actual and target velocities of the head.

The present invention is based on the realisation that any steady state offset between the actual velocity of the head and the target velocity stored in the velocity profile can be minimised by generating a modifying input to the conventional head velocity control system as a function of the output response of the head velocity control system to a predetermined input stimulus.

Accordingly, disk storage apparatus of the present invention can advantageously control the velocity at which the head moves from a current position to a target position independently of scatter in circuit constants and, in the case of optical disk storage apparatus, independently of variation in the shape of grooves on the disk. The head can therefore be moved from a current position to a target position without requiring the apparatus to perform repeated seek operations and thus facilitating smooth transitition from seek operations to track following operations.

Viewing the present invention from a second aspect, there is provided disk storage apparatus having, driving means for moving a head in the radial direction on a recording disk, velocity detecting means for detecting the velocity at which the head moves, a velocity profile for storing information on the target velocity of the head, driving signal generating means for comparing a signal from the velocity detecting means with a signal from the velocity profile and outputting a driving signal to the driving means based on the result of the comparison, and control means for measuring a time required for moving the head to a predetermined distance at a predetermined velocity, comparing the measured time with a predetermined reference value, and modifying the driving signal based on the result of the comparison.

Viewing the present invention from a third aspect, there is provided a method of moving a head in a disk storage apparatus radially across a storage disk to a desired position in response to a drive signal, the method comprising: measuring a first period required to move the head by a first predetermined distance at a first predetermined velocity radially towards the centre of the disk; comparing the first period with a first predetermined value; adjusting the drive signal when the head moves towards the centre of the disk as a function of any difference between the first period and the first predetermined value; measuring a second period required to move the head by a second predetermined distance at a second predetermined velocity away from the centre of the disk; comparing the second period with a second predetermined value; and adjusting the drive signal when the head moves away from the centre of the disk as a function of any difference between the second period and the second predetermined value.

In a preferred embodiment of the present invention, there is provided disk storage apparatus having an optical head for projecting a beam onto the recording surface of an optical disk, driving means for driving the optical head to move the beam in the radial direction of the disk, velocity detecting means for generating a signal which indicates the velocity of beam in movement, a velocity profile indicating information about the target velocity of beam during a seek operation, driving signal generating means for comparing a signal from the velocity detecting means with a signal from the velocity profile and providing the driving means with a driving signal based on the result of the comparison, and control means for comparing a time required for moving the beam to a predetermined distance at a predetermined velocity with a predetermined reference value and modifying a signal indicating the velocity of the beam or the driving signal based on the result of the comparison in such a manner that scatter in feedback quantities and fluctuation in the driving signal during velocity control are corrected for.

A preferred embodiment of the present invention will now be described with reference to the accompanying drawings in which:

Figure 1 is a block diagram of disk storage apparatus of the present invention;

Figure 2 is a perspective view of the disk storage apparatus;

Figure 3 is a graph showing a velocity profile of the disk storage apparatus;

Figure 4 is a flowchart showing a series of operations during a seek operation in the disk storage apparatus;

Figure 5(A) is a chart showing a TES during a constant-velocity seek operation in the disk storage apparatus where the actual velocity of movement is higher than in detected velocity information.

Figure 5(B) shows a TES before and after correction;

Figure 5(C) and Figure 5(D) show velocity profiles for a distance from a current position to a target position during a seek operation before and after correction, velocity nformation detected based on a TES, and the actual velocity of movement of the head of the apparatus;

Figure 6(A) show a TES during a constant-velocity seek operation in the disk storage apparatus where the actual velocity of movement is lower than the detected velocity information;

Figure 6(B) show a TES before and after correction;

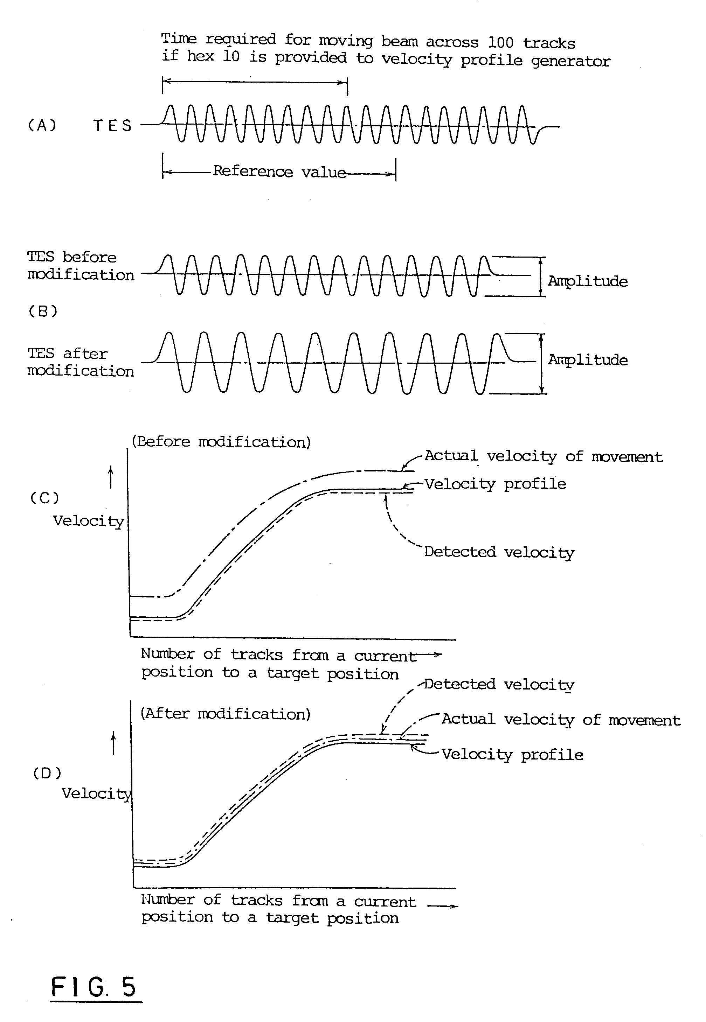

Figure 5(C) and Figure(D) show velocity profiles for a distance from a current position to a target position during a seek operation before and after correction, velocity information detected based on a TES, and the actual velocity of movement of the head of the apparatus;

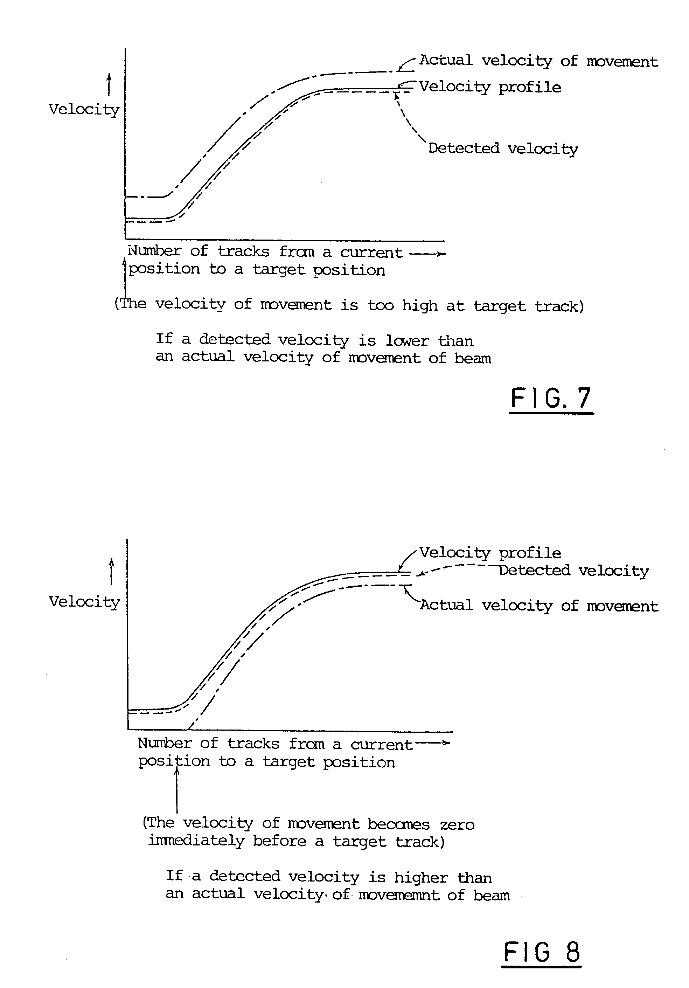

Figure 7 is a graph showing the values of detected velocity and actual velocity of head movement in comparison with a velocity profile in the case where the actual velocity of movement is higher than in the velocity information; and

Figure 8 is a graph showing the values of detected velocity and an actual velocity of the movement of a head in comparison with a velocity profile in the case where an actual velocity of movement is lower than in velocity information.

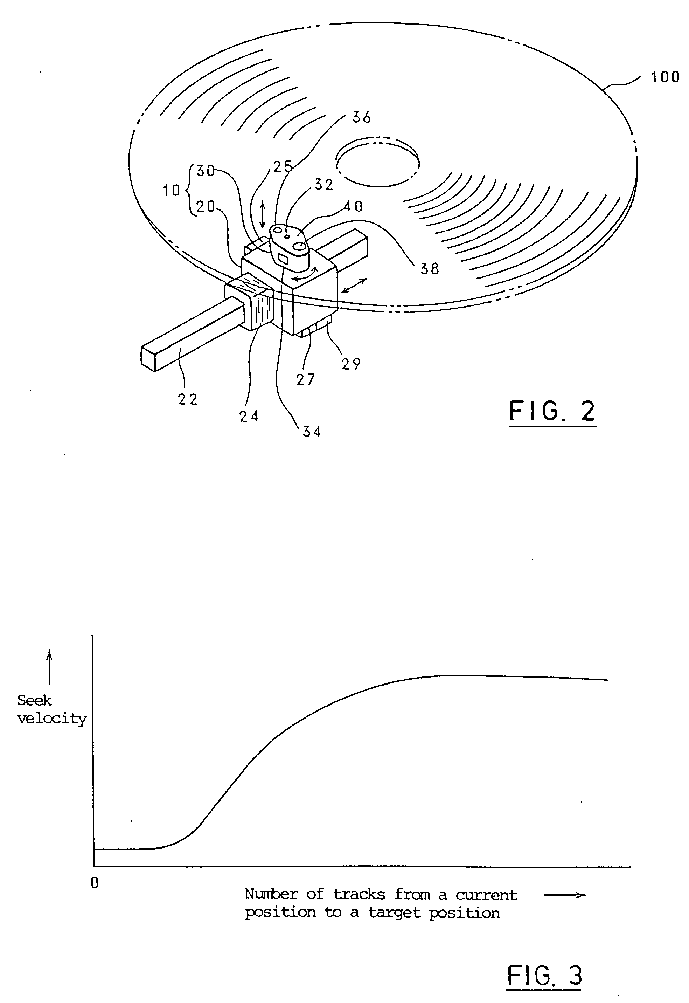

Figure 3 indicates the relationship between the distance from a current position to a target position and a target velocity.

Figure 7 shows values of detected velocity for values from the velocity profile, and the actual velocity at which the beam moves where even if the difference between the detected velocity and the ideal velocity from the velocity profile is zero, the actual velocity of the movement of the beam is higher than the ideal velocity assumed theoretically. In this case, as is obvious from the figure, even if the beam reaches the target position, it is not satisfactorily decelerated. Thus the beam cannot shift to a track following operation at the target position.

Figure 8 shows values of detected velocity for values from the velocity profile, and the actual velocity at which the beam moves where, even if the difference between the detected velocity and the ideal velocity from the velocity profile is zero, the actual velocity of the movement of the beam becomes lower than the ideal velocity assumed theoretically. In this case, as is obvious from the figure, the velocity of the movement of the beam from the optical head becomes zero before a target track position is reached and thus that target track cannot be reached during one seek operation.

Referring now to Figure 2, disk storage apparatus of the present invention comprises an optical head 10 composed of a coarse actuator 20 and a fine actuator 30. The coarse actuator 20 is supported by a rail 22 so that it can move freely in the radial direction of an optical disk 100 (in the direction of a seek operation), and is driven in the direction of the seek operation by a coarse actuator VCM (Voice Coil Motor) 24. The fine actuator 30 is supported by the coarse actuator 20 through a shaft 32 so that it can move in the focusing and the tracking directions and is driven in the focusing direction and in the tracking direction by a focus VCM 34 and a tracking VCM 36, respectively. The fine actuator 30 has an objective lens 38 fixed from which a laser beam 40 is projected onto the optical disk 100. The coarse actuator 20 is provided with a relative position error (RPE) detecting sensor 25, a focus error signal (FES) detecting sensor 27, and a tracking error signal (TES) detecting sensor 29. The relative position error (RPE) detecting sensor 25, which is, for example, a photo sensor with two split sensitive parts, detects the quantity of a relative deflection (rotational deflection from a neutral position) of the fine actuator 30 from the coarse actuator 20. The focus error signal (FES) detecting sensor 27, which is, for example, a photo sensor with four split sensitive parts, detects a positional difference of a spot of the laser beam 40 from a focusing point on the optical disk 100. The tracking error signal (TES) detecting sensor 29, which is, for example, a photo sensor with two split sensitive parts detects a positional deviation of a spot of the laser beam 40 from the track center on the optical disk 100.

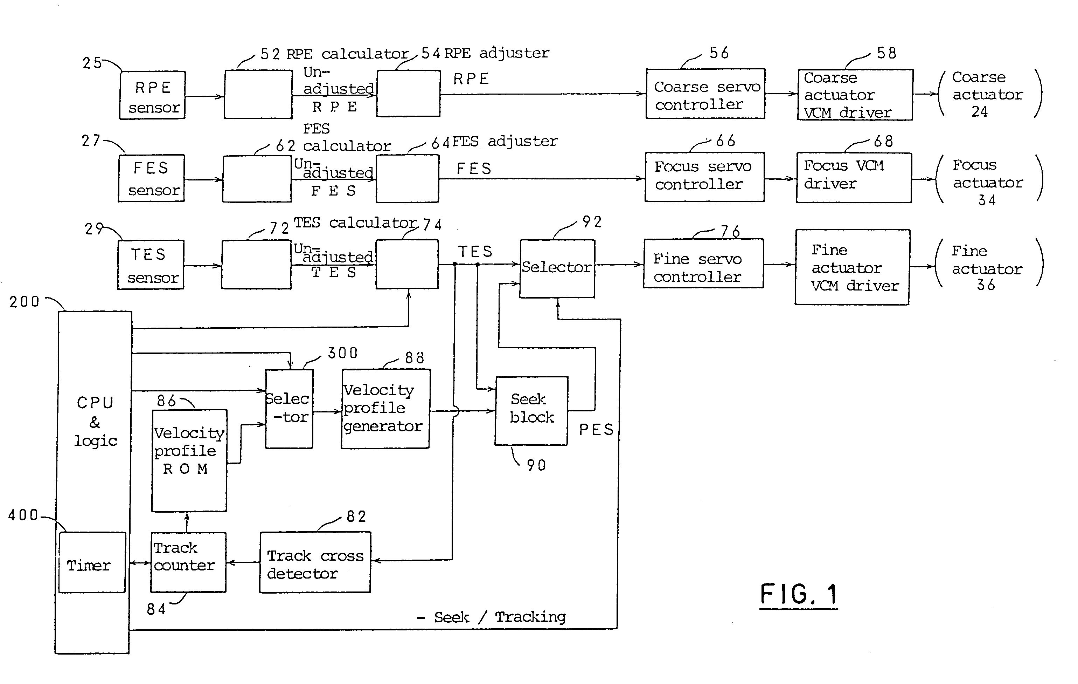

Referring to Figure 1, the output of the relative position error (RPE) detecting sensor 25 is connected to a RPE calculator 52. The RPE calculator 52 calculates the difference between the detected signals from the two photo-sensitive parts of the RPE detecting sensor 25 and then outputs an unadjusted or raw RPE. The gain and the offset of the raw (unadjusted) RPE are adjusted by a RPE adjuster 54 and the adjusted RPE is provided to a coarse servo controller 56 and a tracking servo controller 76. The RPE, after low-pass filtering and compensation for phase shift by the coarse servo controller 56, is provided to a coarse actuator VCM driver 58 from which driving current according to the amplitude and the sign of the RPE, that is, the quantity and the direction of a deflection of the fine actuator 30 relative to the coarse actuator 20 is provided to the coarse activator VCM 24.

The output of the FES detecting sensor 27 is connected to a FES calculator 62. The FES calculator 62 calculates the difference between the sum of detected signals from one pair of two photo sensitive parts of the FES detecting sensor 27 diagonally positioned each other and the sum of detecting signals from the other pair of two photo-sensitive parts diagonally positioned each other and then outputs an unadjusted or raw FES. The offset of the raw (unadjusted) FES is adjusted by a FES adjuster 64, and the adjusted FES is provided to a focus servo controller 66. The FES, after low-pass filtering and compensation for phase shift by the focus servo controller 66, is provided to a focus VCM driver 68 from which driving current according to the amplitude and sign of the FES, that is, the positional deviation and the direction of a spot of the laser beam 40 from the focus point is provided to the focus VCM 34.

The output of the TES detecting sensor 29 is connected to a TES calculator 72. The TES calculator calculates the difference between detected signals from the two photo sensitive parts of the TES detecting sensor 29 to output an unadjusted or raw TES. The gain and the offset of the raw (unadjusted) TES are adjusted by the TES adjuster 74 and the adjusted TES is provided, through a first selector 92, through the tracking servo controller 76, to a tracking VCM driver 78 providing a driving signal for tracking to the tracking VCM 36.

The TES adjuster 74 is connected to a servo system controller (CPU plus logic circuit) 200 used as control means. The amplitude of the raw TES can be varied based on a signal from the controller 200 during a seek operation.

The adjusted TES is connected to a track cross detector 82 in which the number of times when the optical head 10 (that is, a beam spot) moves across tracks is detected based on the TES and from which the result of detection is provided to a track counter 84. At the start of a seek operation, the servo system controller 200 provides a value indicating a track distance from a current position to a target position to the track counter 84. A value contained in the track counter 84 is decreased by subtraction each time the optical head 10 moves across a track during the seek operation.

The controller 200 is provided with a velocity profile ROM 86 in which the relation between a track distance from the current position to the target position and the desired velocity (a target velocity), or velocity profile as in Figure3, used for controlling the seek velocity, is stored. When the current position is provided based on the value of the track counter 84, the velocity profile ROM 86 outputs the desired velocity, represented by a digital value, at the current position, through a second selector 300, to a velocity profile generator 88 in which the digital value is converted to an analogue value to output to a seek block 90 used as driving signal generating means. The velocity profile generator 88 is also connected to the controller 200 through the second selector 300 which determines, based on a control signal from the controller 200, whether the desired digital velocity provided to the velocity profile generator 88 is provided from the velocity profile ROM 86 or directly from the controller 200. The controller 200 is provided with an internal timer 400 for measuring time during a seek operation.

The seek block 90 compares the value obtained from the velocity profile generator 88 with the current velocity information conveyed by the TES to produce a positioning error signal (PES) which is an integrated value of the result of the comparison. The PES is provided to the first selector 92 to which the. TES and the PES are provided. In seek operation mode, the selector 92 provides the PES to the fine tracking servo controller 76. In tracking operation mode, the selector 92 provides the TES to the fine tracking servo controller 76. In seek operation mode, the selector 92 may provide PES to not only the fine tracking servo controller 76 but the coarse servo controller 56.

The TES adjuster 74, the velocity profile generator 88, the selector 300, controller 200, and the time measuring timer 400 constitute automatic seek-velocity modifying means.

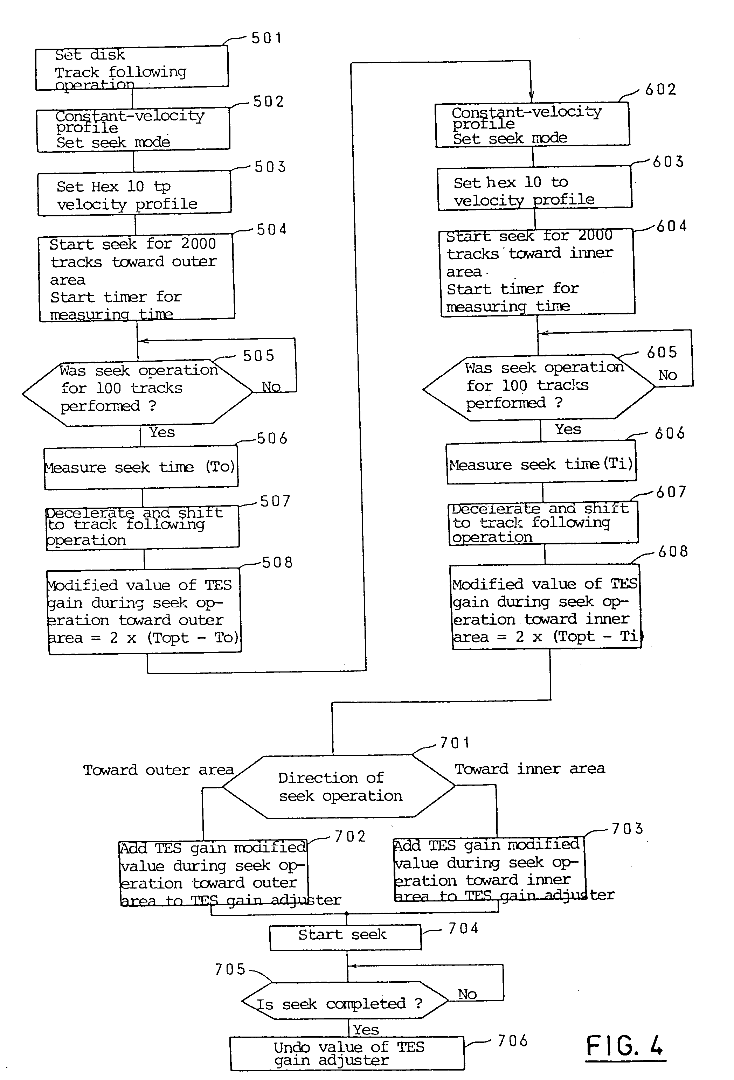

A method for modifying velocity control in the disk storage apparatus will now be described with reference to Figure 4.

After the optical disk 100 is loaded into the drive apparatus and changes to track following operation mode (Processing block 501), the second selector 300 is controlled by a switching signal from the controller 200 to set the optical disk 100 to constant velocity seek mode (Processing block 502). The controller 200 loads a predetermined value such as Hex 10 into the velocity profile generator 88 (Processing block 503) and starts a seek operation for a predetermined number of tracks (for example, 2000 tracks) toward the outer area of the optical head 100 (Processing block 504). The timer 400 starts at the same time as the seek operation, and if the controller 200 determines that the content of the track counter 84 has decreased by 100 tracks (Decision block 505) a time (seek time) To required for the seek operation for 100 tracks is measured by the timer 400 (Processing block 506). Then a modified value of the gain of the TES during the seek operation toward the outer area of the optical disk 100 is calculated by a predetermined equation so that if the seek time To is less than or greater than a target time, that is, a predetermined reference value Topt, a corresponding positive or negative modified value of the gain of the TES is obtained (Processing block 508).

Specifically, the modified value of the TES gain during the seek operation towards the outer area = 2 x (Topt - To).

After the measurement of the seek time is completed, the selector 300 is switched to the velocity profile ROM 86 to decelerate the seek operation under the velocity control and then shift to track following mode (Processing block 507).

Then, to obtain a modified value of the gain of the TES during a seek operation toward the inner area of the optical disk 100, the selector 300 is switched again to the controller 200 for a setting mode in which a constant-velocity profile is provide.d to the velocity profile generator 88 (Processing block 602). The controller 200 sets a predetermined profile in the velocity profile generator 88 (Processing block 603) and starts the seek operation for a predetermined number of tracks towards the inner area of the optical disk 100 (Processing block 604). The timer 400 starts, at the same time as the seek operation and the controller 200 determines if the content of the track counter 84 has decreased by 100 tracks (Decision block 605) and if so, a seek time Ti is measured by the timer 400 (Processing block 606). Then a modified value of the gain of the TES during the seek operation toward the inner area of the optical disk 100 is calculated by a predetermined equation so that if the seek time Ti is less than or greater than a target time Topt, a positive or a negative modified value of the gain of the TES can be obtained, respectively (Processing block 608). After the measurement of the seek time is completed, the selector 300 is switched to the velocity profile ROM 86 to shift to track following mode during the usual seek operation under the velocity control (Processing block 607).

Specifically, the modified valve of the TES gain during the seek operation toward the inner area = 2 x (Topt - Ti).

After completing the above operations, the controller 200 determines if the seek operation is toward the outer or the inner area (Decision block 701). If the seek operation is toward the outer area, the TES gain adjuster of the TES adjuster 74 is adjusted by the modified value of the TES gain during the seek operation toward the outer area (Processing block 702). If the seek operation is toward the inner area, the TES gain adjusted by the modified value of the TES gain during the seek operation toward the inner area (Processing block 703). The seek operation is then started (Processing block 704). At the completion of the seek operation (Decision block 705), the value of the TES gain adjuster of the TES adjuster 74 is released (Processing block 706).

Figure 5(A) shows a TES obtained when the controller 200 provides a constant value such as Hex 10 to the velocity profile generator 88 to move a beam at a constant velocity, where the time required for moving the beam across 100 tracks is shorted than the predetermined reference valve. The reference value is a theoretically derived and previously given value. The fact that the time required for moving the beam across 100 tracks is less than the expected value derived theoretically means that the velocity of the beam is higher than the expected value derived theoretically. Accordingly, if in such a case, control is performed so that the difference between a velocity signal detected from the TES and a signal with respect to a target velocity obtained from the velocity profile always becomes zero, an actual velocity, as shown in Figure 5(C), always becomes higher than the target velocity provided by the velocity profile.

To improve this, in this embodiment, as shown in Figure 5(B), the amplitude of the TES is increased. Since the larger amplitude of the TES causes a larger detected velocity value to be obtained from the differentiation of the TES, the difference between the detected velocity value and the velocity profile information decreases. The driving signal (driving current) used to move the beam is generated as a function of the difference. This means that the above decreased difference causes the amplitude of the driving signal to be decreased. If the required time is, as shown in Figure 5(A), shorter than the reference value, the beam moves at a velocity greater than the value derived theoretically. Accordingly, the decrease in the amplitude of the driving signal provides appropriate correction. Figure 5(D) shows that, as the result of such modification, the actual velocity of the beam corresponds to the value from the velocity profile.

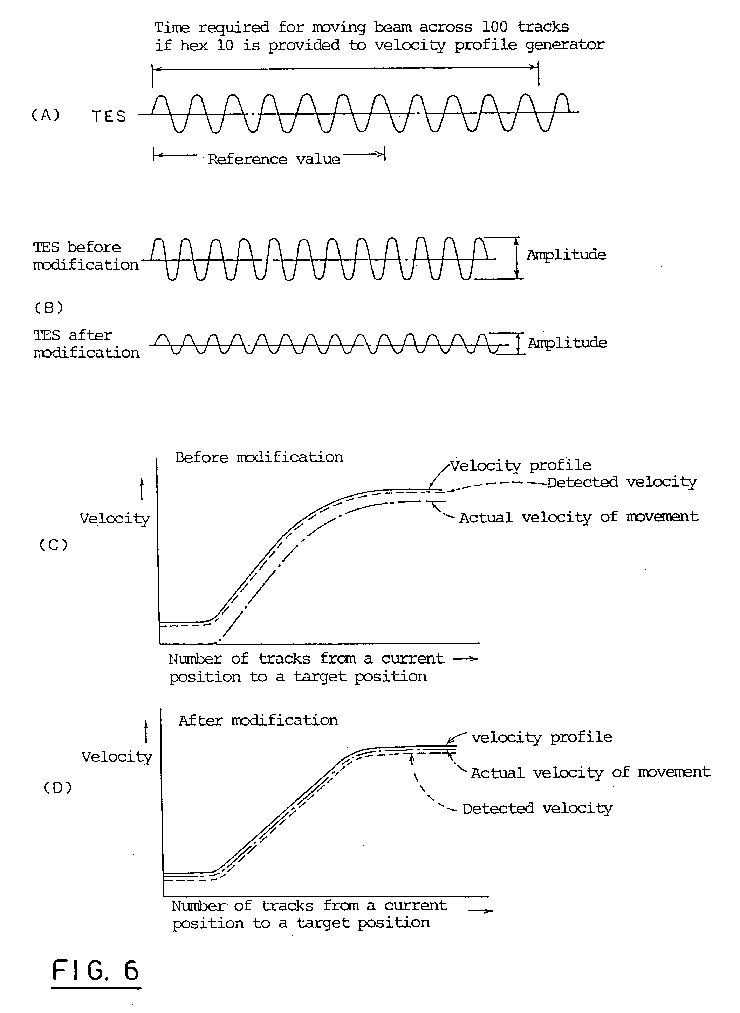

Figure 6(A) shows a TES obtained when the controller 200 provides a constant value such as Hex 10 to the velocity profile generator 88 to move a beam at a constant velocity, where the time required for moving the beam across, for example, 100 tracks is longer than a predetermined reference value. The fact that the time required for moving the beam across 100 tracks is greater than the expected value derived theoretically means that the velocity of the beam is lower than an expected value derived theoretically. Accordingly, if control is performed so that the difference between the velocity signal determined from the TES and a target velocity obtained from the velocity profile always becomes zero, the actual velocity, as shown in Figure 6(C), always becomes lower than the target velocity provided by the velocity profile.

To improve this, in this embodiment, as shown in Figure 6(B), the amplitude of the TES is decreased. Since the smaller amplitude of the TES causes a smaller detected velocity value to be obtained from the differentiation of the TES, the difference between the velocity detected value and the velocity profile information increases. The driving signal (driving current) used to move the beam is generated as a function of the difference. This means that the above increased difference causes the amplitude of the driving signal to be increased. If the required time is, as shown in Figure 6(A), longer than the reference value, the beam moves at a velocity lower than the value derived theoretically. Accordingly, the increase in the amplitude of the driving signal leads to appropriate correction. Figure 6(D) shows that, as the result of such modification, the actual velocity of a beam corresponds to the value from the velocity profile.

An example of disk storage apparatus of the present invention has now been described with reference to optical disk storage apparatus. It will, however, be appreciated that the present invention is equally applicable to magnetic disk storage apparatus. With respect to optical disk storage apparatus, the movement of the beam and the movement of the head have the same meaning.

Also, in the example hereinbefore described the velocity signal is detected based on the average of the amplitudes of a signal obtained from the differentiation of the TES. However, it will be appreciated that the velocity signal may be detected by integrating the driving current value of the actuator. It will also be appreciated that the velocity signal may be detected from the frequency of the TES, which has been changed by applying a voltage. It will also be appreciated that the velocity signal may be detected from the measurement of the count time in the track cross detector or the time in nhich the content of the track counter varies.

Also, in the example hereinbefore described, since a velocity signal is detected based on the differentiation of the TES, the quantity of feedback under velocity control has been corrected by adjusting the TES gain of the TES adjuster 74. However, it will be appreciated thatif the velocity signal is, as described above, detected by a method other than differentiation of the TES, the quantity of feedback under the velocity control may be corrected by increasing or decreasing the gain of the detected velocity signal.

It will further be appreciated that instead of correcting the quantity of feedback, the output gain of the velocity profile generator 88 may be corrected.

Also, in the example hereinbefore described, the time required for moving a beam at a constant velocity is measured. However, it will be appreciated that the time require.d for moving the beam at a non-constant velocity based on the profile ROM may be measured.

It will now be appreciated that the present invention advantageously permits the velocity of the head of a disk storage apparatus during a seek operation to be controlled independently of scatter in circuit constants or, in the case of an optical disk, variation in the shapes of grooves of the disk with high precision. The seek operation can thus be shifted successfully to a track following operation, and the seek operation itself can be performed successfully.

## Claims

1. Disk storage apparatus comprising:

   driving means (78) for moving a head in the radial direction on storage disk in response to a drive signal;

   velocity detecting means (74) for generating a velocity measurement as a function of the actual velocity of the head;

   a memory (86) storing a velocity profile for indicating a target velocity of the head; and

   drive signal generating means (90) for generating the drive signal as a function of the difference between the velocity measurement from the velocity detecting means (74) and the target velocity from the velocity profile;

   characterised in that the apparatus further comprises compensation means (200) for measuring the time taken to move the head by a predetermined distance at a predetermined velocity and for varying the drive signal as a function of the difference between the measured time and a predetermined reference value to minimise any steady state offset between the actual and target velocities of the head.

2. Disk storage apparatus as claimed in claim 1 wherein the compensation means (200) provides the signal generating means (90) with a constant value and measure the time required for moving the head at a predetermined velocity determined by the constant value.

3. Disk storage apparatus as claimed in claim 1 or 2 wherein the velocity detecting means (74) detects the velocity of head movement as a function of a tracking error signal indicating a deviation in head position relative to a track on the disk and the compensation means (200) varies the amplitude of the tracking error signal as a function of the difference between the measured time and the predetermined reference value.

4. Disk storage apparatus as claimed in claim (1) wherein the compensation means varies the output gain of the velocity profile as a function of the difference between the measured time and the predetermined reference value.

5. Disk storage apparatus as claimed in any preceding claim wherein the compensation means (200) measures the time taken to move the head by a predetermined distance at a predetermined velocity radially towards the centre of the disk and varies the drive signal when the head moves towards the centre, as a function of the difference between the measured time and a first predetermined reference value, and measures the time taken to move the head by a predetermined distance at a predetermined velocity radially away from the centre of the disk and varies the drive signal when the head moves away from the centre as a function of the difference between the measured time and a second predetermined reference value.

6. Disk storage apparatus having, driving means for moving a head in the radial direction on a recording disk, velocity detecting means for detecting the velocity at which the head moves, a velocity profile for storing information on the target velocity of the head, driving signal generating means for comparing a signal from the velocity detecting means with a signal from the velocity profile and outputting a driving signal to the driving means based on the result of the comparison, and compensation means for measuring a time required for moving the head to a predetermined distance at a predetermined velocity, comparing the measured time with a predetermined reference value, and modifying the driving signal based on the result of the comparison.

7. Disk storage apparatus having an optical head for projecting a beam onto the recording surface of an optical disk, driving means for driving said optical head to move said beam in the radial direction of said disk, velocity detecting means for generating a signal which indicates the velocity of beam in movement, a velocity profile indicating information about the target velocity of beam during a seek operation, driving signal generating means for comparing a signal from said velocity detecting means with a signal from said velocity profile and providing said driving means with a driving signal based on the result of the comparison, and compensation means for comparing a time required for moving said beam to a predetermined distance at a predetermined velocity with a predetermined reference value and modifying a signal indicating the velocity of said beam or said driving signal based on the result of the comparison.

8. A method of moving a head in a disk storage apparatus radially across a storage disk from a current position to a desired position in response to a drive signal in such a manner that any steady state offset between actual and target head velocities is minimised, the method comprising:

measuring a first period required to move the head by a first predetermined distance at a first predetermined velocity radially towards the centre of the disk;

comparing the first period with a first predetermined value;

adjusting the drive signal when the head moves towards the centre of the disk as a function of any difference between the first period and the first predetermined value;

measuring a second period required to move the head by a second predetermined distance at a second predetermined velocity away from the centre of the disk;

comparing the second period with a second predetermined value; and

adjusting the drive signal when the head moves away from the centre of the disk as a function of any difference between the second period and the second predetermined value.

FIG. 1

FIG. 2

Seek velocity

0

Number of tracks from a current ⟶
position to a target position

FIG. 3

```
┌─────────────────────────┐ ╭─ 501
│ Set disk                │
│ Track following         │
│ operation               │
└─────────────────────────┘
┌─────────────────────────┐ ╭─ 502
│ Constant-velocity       │
│ profile                 │
│ Set seek mode           │
└─────────────────────────┘
┌─────────────────────────┐ ╭─ 503
│ Set Hex 10 tp           │
│ velocity profile        │
└─────────────────────────┘
┌─────────────────────────┐ ╭─ 504
│ Start seek for 2000     │
│ tracks toward outer     │
│ area                    │
│ Start timer for         │
│ measuring time          │
└─────────────────────────┘
```

```
┌─────────────────────────┐ ╭─ 602
│ Constant-velocity       │
│ profile                 │
│ Set seek mode           │
└─────────────────────────┘
┌─────────────────────────┐ ╭─ 603
│ Set hex 10 to           │
│ velocity profile        │
└─────────────────────────┘
┌─────────────────────────┐ ╭─ 604
│ Start seek for 2000     │
│ tracks toward inner     │
│ area                    │
│ Start timer for         │
│ measuring time          │
└─────────────────────────┘
```

**505** Was seek operation for 100 tracks performed ? — No

**Yes**

**506** Measure seek time (To)

**507** Decelerate and shift to track following operation

**508** Modified value of TES gain during seek operation toward outer area = 2 x (Topt − To)

**605** Was seek operation for 100 tracks performed ? — No

**Yes**

**606** Measure seek time (Ti)

**607** Decelerate and shift to track following operation

**608** Modified value of TES gain during seek operation toward inner area = 2 x (Topt − Ti)

**701** Direction of seek operation

Toward outer area ◄————————————————————► Toward inner area

**702** Add TES gain modified value during seek operation toward outer area to TES gain adjuster

**703** Add TES gain modified value during seek operation toward inner area to TES gain adjuster

**704** Start seek

**705** Is seek completed ? — No

**Yes**

**706** Undo value of TES gain adjuster

## FIG. 4

Time required for moving beam across 100 tracks
if hex 10 is provided to velocity profile generator

(A)  T E S

|←——————Reference value——————→|

TES before
modification

Amplitude

(B)

TES after
modification

Amplitude

(C)

Velocity

(Before modification)

Actual velocity of movement

Velocity profile

Detected velocity

Number of tracks from a current→
position to a target position

(D)

Velocity

(After modification)

Detected velocity

Actual velocity of movement

Velocity profile

Number of tracks from a current ——→
position to a target position

# FIG. 5

Time required for moving beam across 100 tracks
if hex 10 is provided to velocity profile generator

(A)  T E S

|←——————— Reference value ——————→|

TES before
modification                                                              } Amplitude

(B)

TES after
modification                                                       } Amplitude

Before modification

Velocity

(C)

Velocity profile
————Detected velocity
Actual velocity of movement

Number of tracks from a current —→
position to a target position

After modification

Velocity

(D)

velocity profile
Actual velocity of movement
Detected velocity

Number of tracks from a current —→
position to a target position

# FIG. 6

Velocity ↑

Actual velocity of movement

Velocity profile

Detected velocity

Number of tracks from a current ——→
position to a target position

(The velocity of movement is too high at target track)

If a detected velocity is lower than
an actual velocity of movement of beam

## FIG. 7

Velocity ↑

Velocity profile

Detected velocity

Actual velocity of movement

Number of tracks from a current ——→
position to a target position

(The velocity of movement becomes zero
immediately before a target track)

If a detected velocity is higher than
an actual velocity of movememnt of beam

## FIG 8